# EUROPEAN PATENT APPLICATION

(11) **EP 4 021 001 A1**
(43) Date of publication of application: **29.06.2022**
(21) Application number: 20855105.1
(22) Date of filing: 19.08.2020
(51) Int. Cl.: H04N 21/44, H04N 21/442, H04N 21/45, H04N 21/458, H04N 21/81

(54) **CODE STREAM PROCESSING METHOD AND DEVICE, FIRST TERMINAL, SECOND TERMINAL AND STORAGE MEDIUM**

(30) Priority: 20.08.2019 CN 201910770654
(71) Applicant: ZTE Corporation, Shenzhen, Guangdong 518057 (CN)
(72) Inventor: WU, Zhao, Shenzhen, Guangdong 518057 (CN); WU, Ping, Shenzhen, Guangdong 518057 (CN)
(74) Representative: Aipex B.V.
(86) International application number: PCT/CN2020/109928
(87) International publication number: WO 2021/032105

(57) **Abstract**

Provided are a code stream processing method and device, a first terminal, a second terminal and a storage medium. The method includes: acquiring panoramic image data; acquiring movement information; and generating a code stream according to the panoramic image data and the movement information.

## Description

The application claims priority to Chinese Patent Application No. 201910770654.5 filed with the China National Intellectual Property Administration (CNIPA) on Aug. 20, 2019, the disclosure of which is incorporated herein by reference in its entirety.

### TECHNICAL FIELD

The present application relates to the field of communications, specifically, a code stream processing method and device, a first terminal, a second terminal and a storage medium.

### BACKGROUND

Immersive videos can enable users to participate in the development of media content, provide an immersive experience, and bring completely different media experiences. Users can participate in the video playing process in real time by wearing head-mounted display devices. Different from previous videos, immersive videos, also known as 360-degree panoramic video, covers a large video area and a wide range.

When users watch immersive videos, due to the limitation of the users' viewing angle, the video scene that users are capable of watching is not a complete 360-degree panoramic video, but only a part of the picture in the panoramic video. Therefore, it is an urgent technical problem to be solved at present which part of the video picture in the immersive video is to be presented to users when the immersive video is transmitted to users for watching.

### SUMMARY

The present application provides a code stream processing method and device, a first terminal, a second terminal and a storage medium, to at least solve the problem that it is difficult to determine which part of the video picture in the immersive video is to be presented to the user.

In a first aspect, an embodiment of the present application provides a code stream processing method which includes that: panoramic image data is acquired, movement information is acquired, and a code stream is generated according to the panoramic image data and the movement information.

In a second aspect, an embodiment of the present application provides a code stream processing method which includes that: a code stream is received, movement information is extracted from the code stream, and in a case where the movement information is extracted, panoramic image data is processed according to the extracted movement information to obtain target image data.

In a third aspect, an embodiment of the present application provides a code stream processing device which includes an acquisition module and a generation module.

The acquisition module is configured to acquire panoramic image data and acquire movement information.

The generation module is configured to generate a code stream according to the panoramic image data and the movement information.

In a fourth aspect, an embodiment of the present application provides a code stream processing device which includes a receiving module, an extraction module, and a processing module.

The receiving module is configured to receive a code stream.

The extraction module is configured to extract movement information from the code stream.

The processing module is configured to, in a case where the movement information is extracted, process panoramic image data according to the extracted movement information to obtain target image data.

In a fifth aspect, an embodiment of the present application provides a first terminal which includes one or more processors and a storage device.

The storage device is configured to store one or more programs.

The one or more programs, when executed by the one or more processors, enable the one or more processors to perform the code stream processing method described in the first aspect of the present application.

In a sixth aspect, an embodiment of the present application provides a second terminal which includes one or more processors and a storage device.

The storage device is configured to store one or more programs.

The one or more programs, when executed by the one or more processors, enable the one or more processors to perform the code stream processing method described in the second aspect of the present application.

In a seventh aspect, an embodiment of the present application provides a storage medium. The storage medium is configured to store a computer program which, when executed by a processor, performs any one of the methods in the embodiments of the present application.

More description about the above-mentioned embodiments and other aspects of the present application and the implementations thereof is to be provided in the BRIEF DESCRIPTION OF DRAWINGS, DETAILED DESCRIPTION, and claims.

### BRIEF DESCRIPTION OF DRAWINGS

FIG. 1 is a flowchart of a code stream processing method according to the present application;
FIG. 2 is a flowchart of another code stream processing method according to the present application;
FIG. 3 is a structural schematic diagram of a code stream processing device according to the present application;
FIG. 3A is a structural schematic diagram of another code stream processing device according to the present application;
FIG. 4 is a structural schematic diagram of another code stream processing device according to the present application;
FIG. 4A is a structural schematic diagram of another code stream processing device according to the present application;
FIG. 5 is a structural schematic diagram of a first terminal according to the present application; and
FIG. 6 is a structural schematic diagram of a second terminal according to the present application.

### DETAILED DESCRIPTION

To illustrate the object, schemes and advantages of the present application clearer, the embodiments of the present application will be described hereinafter in detail in conjunction with the drawings. It is to be noted that if not in collision, the embodiments described herein and the features thereof may be combined with each other.

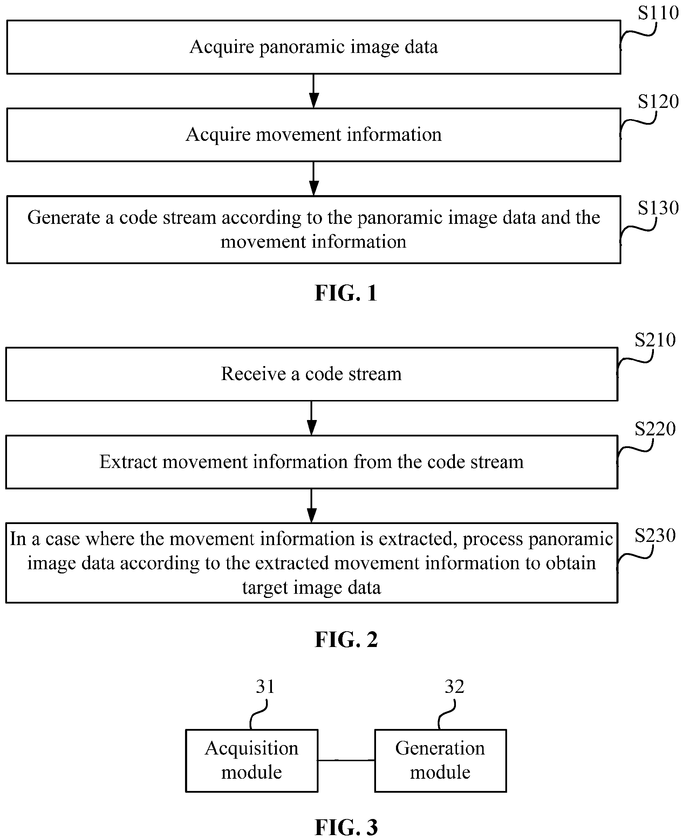

In an exemplary implementation, FIG. 1 is a flowchart of a code stream processing method according to the present application. The method may be applied to the case of forming a code stream, and the formed code stream, when played by the user, may automatically determine which part of the video picture in the code stream to be presented to the user. The method may be performed by a code stream processing device provided by the present application, and the code stream processing device may be implemented by software and/or hardware and integrated on a first terminal. The first terminal may be a code stream generation device. The code stream may be a video code stream or a media stream including system layer information. The generated code stream may be directly viewed by the user on the first terminal or sent to a second terminal and then viewed. In the process of viewing, corresponding target image data may be determined based on movement information to achieve the technical effect of automatically determining which part of the video picture in the immersive video to be presented to the user. In addition, the scenarios of the present application include at least the following. The present application is used in film production, and in this scenario, the director uses different sets of movement information that are different sets of movement parameter combinations to correspondingly design different narrative clues, to obtain corresponding code streams; then when the user views the film, the user may select story scenes displayed by different sets of movement information according to his own preferences so that when different users view the same code stream and different users select different sets of movement parameter combinations, the users view different story scenes. The present application may also be used in sports events, and in this scenario, different athletes correspond to different sets of movement information, and the user may select the movement pictures of his favorite athlete when watching the events, that is, the user may select the movement parameter combination corresponding to the favorite athlete, to achieve viewing the movement pictures of the favorite athlete.

In general, the immersive video is captured in spherical form. A transmitter maps spherical data into two-dimensional plane data, and then the two-dimensional plane data is encoded and transmitted or stored. After a receiver acquires the compressed data, the receiver decodes and reconstructs the two-dimensional plane data and then renders the two-dimensional plane data according to the needs of users. When different users view the immersive video, the different users can view different video pictures based on the movement of their heads or bodies.

In the present application, in the process of encoding, that is, during the generation of the code stream, the movement information of the head or body is associated with video data, that is, the movement information of the head or body is associated with panoramic image data, and thus, in the process of decoding, reconstruction and playing, the video playing may be controlled according to corresponding movement information, to achieve different video viewing effects. In the process of decoding, reconstruction and playing, the user may also choose different preset sightlines or body movement trajectories to obtain different video viewing effects according to his personal preference. Different sightlines or body movement trajectories may be represented by different sets of movement parameter combinations.

As shown in FIG. 1, the code stream processing method provided by the present application includes S110, S120, and S130.

In S 110, panoramic image data is acquired.

The panoramic image data may be used for forming a code stream. The code stream may be an immersive video.

The panoramic image data may be captured by multiple cameras at the same time and spliced together, or may be obtained by splicing multiple images captured by a single camera through translation, rotation and other operations, or may be synthesized panoramic image data, or may be existing panoramic image data, or may be captured by a panoramic camera.

The means for the first terminal to acquire the panoramic image data includes, but is not limited to, receiving panoramic image data sent by other devices, or obtaining panoramic image data through an acquisition device of the first terminal, where the acquisition device includes, but is not limited to, at least one of the following: at least one camera, or a panoramic camera.

The panoramic image data may be a single still image or a frame of image data in a video.

In S120, movement information is acquired.

The movement information may be acquired synchronously and in real time during the acquisition of the panoramic image data, or may be preset, which is not limited thereto as long as the movement information associated with the panoramic image data is acquired. That is, the movement information acquired in S120 may be movement information associated with the panoramic image data acquired in S110.

It is to be understood that the code stream may be generated by encoding multiple frames of panoramic image data, and each frame of panoramic image data may have corresponding movement information. In the embodiment, in the process of code stream generation, the panoramic image data may be associated with the corresponding movement information.

The movement information includes, but is not limited to, head movement information, body movement information, and viewpoint movement information. The head movement information includes, but is not limited to, head position information and head rotation information of a user; or the head movement information may be head change information such as a combination of head position information and head rotation information. The body movement information includes, but is not limited to, body position information, body rotation information and body change information of a user, such as a combination of body position information and body rotation information. The viewpoint movement information may be viewpoint position information, viewpoint rotation information and viewpoint change information of a user, such as a combination of viewpoint position information and viewpoint rotation information.

The position information may be coordinate information in a global coordinate system such as Cartesian coordinate system or may be coordinate information in the local coordinate system. The position information includes, but is not limited to, head movement information, body movement information, and viewpoint movement information.

In this embodiment, the movement information may be at least one set of movement parameter combinations. When the code stream is played, the user may select the corresponding movement parameter combination according to the actual situation to view the code stream. Each set of movement parameter combinations includes at least one of: head movement information, body movement information or viewpoint movement information. In a case where the movement information includes multiple sets of movement parameter combinations, the movement information may include multiple pieces of head movement information. It is to be understood that each set of movement parameter combinations may correspond to different story lines in the code stream, that is, different video pictures, i.e. images of different portions of the panoramic image data. Taking an event scenario as an example, one set of movement parameter combinations may correspond to images of an athlete at different times. Taking a movie scenario as an example, if the director needs to set different story trends, multiple sets of movement parameter combinations may be set during the generation of the code stream, and each set of movement parameter combinations corresponds to a different story trend, that is, each set of movement parameter combinations presents images of different portions of panoramic image data to the user.

For example, Table 1 is a head movement information organization relationship table. The organization relationship table of body movement information and viewpoint movement information may be adaptively adjusted according to the head movement information organization relationship table, which is not repeated here.

**Table 1 Head movement information organization relationship table**

| | |
|---|---|
| omni_head_movement() { | Descriptor |
| omni_head_movement_i d | u(10) |
| omni head movement cancel flag | u(1) |
| if(! omni_head_movement_cancel_flag) { | |
| omni_head_movement_persistence_flag | u(1) |
| omni_head_movement_cnt_minus1 | u(4) |
| for(i = 0; i <= omni head movement cnt minus1; i++) { | |
| omni_head_movment_para(); | |
| } | |
| } | |
| } | |

With reference to Table 1, the descriptor may represent the number of bits occupied by the content included in the movement information. For example, u(10) may represent that 10 bits are occupied.

Here, omni_head_movement_id may be understood as a movement information identifier, which is used for identifying different head movement information, that is, for distinguishing the movement information at different times.

Here, omni_head_movement_cancel_flag may be understood as a head movement information cancellation flag. When omni_head_movement_cancel_flag is equal to 1, it indicates that previous head movement information is kept unchanged, that is, the head movement information at a previous time is kept unchanged; when omni_head_movement_cancel_flag is equal to 0, the following is new head movement information

Here, omni_head_movement_persistence_flag may be understood as a head movement information persistence flag. When omni_head_movement_persistence_flag is equal to 0, the head movement information is only applied to the current panoramic image data; when omni_head_movement_persistence_flag is equal to 1, the head movement information may be continued to be used in a subsequent frame.

Here, omni_head_movement_cnt minus1 plus 1 represents the number of groups of movement information.

Here, omni_head_movment_para() may represent the head movement parameter. The head movement parameter includes one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

Table 2 is an organization form table of the head movement parameter.

**Table 2 Head movement parameter organization form table**

| | |
|---|---|
| omni_head movment_para () { | Descriptor |
| omni_head_pos_x; | i(32) |
| omni_head_pos_y; | i(32) |
| omni_head_pos_z; | i(32) |
| omni_head_yaw; | i(32) |
| omni_head_pitch; | i(32) |
| omni_head_roll; | i(32) |
| } | |

With reference to Table 2, the table may represent that the head movement parameter is composed of head absolute position information and head absolute rotation information; (omni_head_pos_x, omni_head_pos_y, omni_head_posz) may be an absolute coordinate component of position information, that is, the head absolute position information; and (omni_head_yaw, omni_head_pitch, omni_head_roll) may be an absolute rotation angle, that is, the head absolute rotation information.

Table 3 is another organization form table of the head movement parameter.

**Table 3 Another head movement parameter organization form table**

| | |
|---|---|
| omni_head movment_para ( ) { | Descriptor |
| omni_head_pos_dx; | i(32) |
| omni_head_pos_dy; | i(32) |
| omni_head_pos_dz; | i(32) |
| omni_head_yaw_diff; | i(32) |
| omni_head_pitch_diff; | i(32) |
| omni_head_roll_diff; | i(32) |
| } | |

With reference to Table 3, the table may represent that the head movement parameter is composed of head relative position information and head relative rotation information; (omni_head_pos_dx, omni_head_pos_dy, omni_head_pos_dz) may be a position information difference, that is, the head relative position information; and (omni_head_yaw_diff, omni_head_pitch_diff, omni_head_roll_diff) may be a rotation angle difference, that is, the head relative rotation information.

Table 4 is another organization form table of the head movement parameter.

**Table 4 Another head movement parameter organization form table**

| | |
|---|---|
| omni_head mov_para ( ) { | Descriptor |
| mov_type_cnt_minus1; | u(8) |
| for(j = 0; j < mov_type_cnt minus1; j++) { | |
| mov_type; | u(8) |
| if(mov_type == 0) { | |
| /^{∗} no data ^{∗}/ | |
| } | |
| if(mov_type == 1) { | |
| omni_head_pos_x; | i(32) |
| omni_head_pos_y; | i(32) |
| omni_head_pos_z; | i(32) |
| } | |
| else if(mov_type == 2) { | |
| omni_head_pos_dx; | i(32) |
| omni_head_pos_dy; | i(32) |
| omni_head_pos_dz; | i(32) |
| } | |
| else if(mov_type == 3) { | |
| omni_head_yaw; | i(32) |
| omni_head_pitch; | i(32) |
| omni_head roll; | i(32) |
| else if(mov_type == 4) { | |
| omni_head_yaw_diff; | i(32) |
| omni_head_pitch_diff; | i(32) |
| omni head_roll_diff; | i(32) |
| } | |
| } | |
| } | |

With reference to Table 4, mov_type_cnt_minus1 plus 1 represents the number of movement types.

Here, mov_type may represent the movement type of the movement information, where when it is 0, it indicates no data; when it is 1, it indicates head absolute position information; when it is 2, it indicates head relative position information; when it is 3, it indicates a rotation angle absolute value, that is, head absolute rotation information; and when it is 4, it indicates a rotation angle relative value, that is, head absolute rotation information.

Here, (omni_head_pos_x, omni_head_pos_y, omni_head_pos_z) may represent an absolute coordinate component of position information, that is, the head absolute position information; (omni_head_pos_dx, omni_head_pos_dy, omni_head_pos_dz) may represent a position information difference, that is, the head relative position information; (omni_head_yaw, omni_head_pitch, omni_head_roll) may represent an absolute rotation angle, that is, the head absolute rotation information; and (omni_head_yaw_diff, omni_head_pitch_diff, omni_head_roll_diff) may represent a rotation angle difference, that is, the head relative rotation information.

Similarly, the body movement information and viewpoint movement information of the user may be presented separately in the form of the above table, or at least one of the head movement information, body movement information or viewpoint movement information of the user may be presented in the form of the above table. The body movement information may be posture movement information.

It is to be noted that the order of acquiring the movement information and the panoramic image data is not limited, and they may be acquired synchronously or sequentially, for example, the movement information is acquired before the panoramic image data is acquired.

In S130, a code stream is generated according to the panoramic image data and the movement information.

After the panoramic image data and the movement information are acquired, in S130, a code stream may be generated according to the panoramic image data and the movement information. Specifically, the code stream may be data obtained by encoding panoramic image data and movement information acquired at different times. After the panoramic image data is acquired, the panoramic image data may be encoded into a code stream. It is to be noted that the movement information may be directly written into the code stream, or movement information at a current time may be compared with movement information at a previous time to determine whether the movement information at the current time is written into the code stream or determine the content of the code stream to be written.

For example, in a case where the movement information at the current time is the same as the movement information at the previous time, the movement information may not be written in the code stream; or, in order to improve the accuracy of the formed code stream, identification information may be set, an association between the identification information and the panoramic image data may be established, and the identification information may be written into the code stream. The identification information is used for indicating that the movement information is the same as the movement information at the previous time. The previous time may be the time when the movement information is obtained last time.

In the code stream processing method provided by the embodiments of the present application, panoramic image data is acquired, movement information is acquired, and a code stream is generated according to the panoramic image data and the movement information. Therefore, the issue that it is difficult to determine which part of the video picture in the immersive video to be presented to the user when the immersive video is transmitted to users for viewing is solved, and when the user views the code stream, target image data to be presented to the user can be automatically determined according to the code stream generated according to the panoramic image data and the movement information, that is, the part of the video picture in the code stream to be presented to the user can be automatically determined. The target image data is data obtained by processing the panoramic image data according to the movement information.

On the basis of the above embodiments, variant embodiments of the above embodiment are further proposed, and it is to be noted that for the brevity of description, only differences from the above embodiments will be described in the variant embodiments.

In an embodiment, the movement information and the panoramic image data are acquired synchronously or the movement information is preset.

In an embodiment, the movement information includes at least one of: head movement information, body movement information or viewpoint movement information.

The head movement information may be understood as information of the position of the head. The specific content included in the head movement information is not limited, as long as the head movement information can indicate the position of the head, and the position may be represented as an absolute position or a relative position. The body movement information may be understood as information of the position of the body. The specific content included in the body movement information is not limited, as long as the body movement information can indicate the position of the body, and the position may be represented as an absolute position or a relative position. The viewpoint movement information may be understood as information of the position of the viewpoint. The specific content included in the viewpoint movement information is not limited, as long as the viewpoint movement information can indicate the position of the viewpoint, and the position may be represented as an absolute position or a relative position.

In an embodiment, the head movement information includes one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

It is to be noted that being relative may be considered as being relative to the movement information at the previous time. For example, the head relative rotation information may be rotation information relative to head absolute position information at the previous time.

In an embodiment, the body movement information includes one of: body absolute position information, body relative position information, body absolute rotation information, body relative rotation information, a combination of body absolute position information and body absolute rotation information, a combination of body absolute position information and body relative rotation information, a combination of body relative position information and body relative rotation information or a combination of body relative position information and body absolute information.

In an embodiment, the viewpoint movement information includes one of: viewpoint absolute position information, viewpoint relative position information, viewpoint absolute rotation information, viewpoint relative rotation information, a combination of viewpoint absolute position information and viewpoint absolute rotation information, a combination of viewpoint absolute position information and viewpoint relative rotation information, a combination of viewpoint relative position information and viewpoint relative rotation information or a combination of viewpoint relative position information and viewpoint absolute rotation information.

In an embodiment, the movement information includes at least one set of movement parameter combinations, and each set of movement parameter combinations is configured with a corresponding movement parameter group and includes at least one of: head movement information, body movement information or viewpoint movement information.

The movement parameter group may be used for distinguishing different movement parameter combinations, and the specific form of the movement parameter group is not limited and may be determined according to the specific content of corresponding movement parameter combinations. When the user views the code stream, if the movement information includes multiple sets of movement parameter combinations, the user may select a corresponding movement parameter group through a selection instruction and then determine target image data based on a movement parameter combination corresponding to the selected movement parameter group.

In an embodiment, that a code stream is generated according to the panoramic image data and the movement information includes at least one of the following: in a case where the movement information is the same as movement information at a previous time, the code stream is generated according to the panoramic image data; or in a case where the movement information is the same as movement information at a previous time, identification information for indicating that the movement information is the same as the movement information at the previous time is used as new movement information, and the code stream is generated according to the panoramic image data and the new movement information.

In a case where the currently acquired movement information is the same as the movement information at the previous moment, it may be considered that the current movement information has not changed, and the code stream may be directly generated based on panoramic image data in the process of code stream generation; or the movement information may also be represented by identification information, that is, the identification information is used as new movement information, and then the code stream is generated according to the panoramic image data and the new movement information.

In an embodiment, that a code stream is generated according to the panoramic image data and the movement information includes that: the movement information is written into a code stream generated from the panoramic image data.

In the process of code stream generation, the current movement information may be compared with the movement information at the previous time, and the movement information may be directly written into the code stream generated from the panoramic image data.

In an embodiment, that the movement information is written into a code stream generated from the panoramic image data includes that: the movement information is written into at least one of the following of the code stream generated from the panoramic image data: supplemental enhancement information (SEI), video usability information (VUI) or a system layer media attribute description unit. The SEI-related standard information includes H.264/AVC and H.265/HEVC. The VUI-related standard information includes H.264/AVC and H.265/HEVC.

Table 5 is an SEI structure table when the movement information is written into the SEI.

**Table 5 SEI structure table when the movement information is written into the SEI**

| |
|---|
| sei_payload( payloadType, payloadSize ) { |
| ...... |
| if( payloadType = = HEAD_MOVEMENT PARA) { |
| ...... |
| omni_head_movement( payloadSize ); |
| ...... |
| } |
| } |

With reference to Table 5, the data structure of omni_head_movement() corresponds to the data structure of omni_head_movement() in Table 1 and contains the header movement information. It may be acquired from the SEI information that the identification information is information of HEAD MOVEMENT PARA

Similarly, the body movement information and viewpoint movement information of the user may be presented separately in the SEI in the form of Table 1, or the head movement information, body movement information and viewpoint movement information may be combined and then presented in the SEI.

Table 6 is a VUI structure table when the movement information is written into the VUI.

**Table 6 VUI structure table when the movement information is written into the VUI**

| | |
|---|---|
| vui_parameters( ) { | **Descriptor** |
| ...... | |
| omni_head_movement_flag | **u(1)** |
| if(omni_head_movement_flag) { | |
| ...... | |
| omni_head_movement(); | |
| ...... | |
| } | |
| } | |

With reference to Table 6, when the value of omni_head_movement_flag is equal to 1, it means that there is subsequent movement information. The data structure of omni_head_movement() corresponds to the data structure of omni_head_movement() in Table 1 and contains the movement information.

In an embodiment, the movement information may be written into the system layer media attribute description unit, for example, a descriptor of a transport stream, a data unit (such as a Box) of a file format or media description information of a transport stream, such as media presentation description (MPD) and other information units. The relevant standard information included in the MPD is MPEG-DASH.

In an embodiment, the method further includes that: the code stream is stored or sent.

The code stream is sent so that the user who uses a second terminal may view the code stream.

The code stream processing method provided by the embodiment will be described below through examples. The code stream processing method provided by the present application may be regarded as a method for processing a virtual reality video code stream, in which panoramic image data is acquired, at least one set of movement parameter combinations is set, the movement parameter combinations are written into a code stream of the panoramic image data, and the code stream is sent or stored. In order to further describe the technical schemes provided by the embodiment, the technical schemes of the embodiments of the present application will be described below through specific application examples.

The following description of the various methods described above is specific examples of the corresponding methods. When multiple methods are used, the examples of the following methods may be simply combined and concatenated to obtain the corresponding examples.

In an example, the user captures surrounding scene images in real time through a head-mounted device, that is, panoramic image data and head position information of the user. The position of the head of the user is at point A at time T, and the position information at point A is written into an image code stream at time T; the position of the head of the user is at point B at time T+1, and the position information at point B is written into an image code stream at time T+1 or the position increment information (B-A) of point B relative to point A may be written into the image code stream at time T+1. If the position of the head of the user does not change from time T to time T+1, that is, A = B, the position information B or the increment information (B-A) may not be written into the image code stream at time T+1, or identification information is written into the image code stream at T+1 time.

It is to be noted that the panoramic image data and the head position information may not be acquired in real time, but the head position information may be added to the existing panoramic video as needed.

In an example, the user captures surrounding scene images and a rotation angle of the head of the user in real time through a head-mounted device, that is, head rotation information (including head relative rotation information or head absolute rotation information). The rotation angle of the head of the user is α at time T, and the head rotation angle α information is written into an image code stream at time T; the rotation angle of the head of the user is β at time T+1, and the head rotation angle β information is written into an image code stream at time T or the difference information (β-α) between β and α may be written into the image code stream at time T+1. If the head rotation information of the user does not change from time T to time T+1, that is, α = β, the head rotation information β or the difference information (β-α) may not be written into the image code stream at time T+1, or identification information is written into the image code stream at T+1 time.

It is to be noted that the panoramic image data and the head rotation information may not be acquired in real time, but the head rotation information may be added to the existing panoramic video as needed.

In an example, the user captures in real time surrounding scene images as well as head position information and a head rotation angle of the user through a head-mounted device. The head position information and the head rotation angle of the user are A and α respectively at time T, and A and α are written into an image code stream at time T; the head position information and the head rotation angle of the user are B and β respectively at time T+1, and B and β are written into an image code stream at time T+1; the difference information (B-A) between B and A may be written into an image code stream at time T+1; the difference information (β-α) between β and α may be written into an image code stream at time T+1; or a combination of B and (β-α) or a combination of (B-A) and β may be written into the image code stream at time T+1. If the head rotation information of the user, that is, the head rotation angle, is not changed from time T to time T+1, that is, A = B and α = β, B or (B-A) and β or (β-α) may not be written into the image code stream at time T+1, or identification information is written into the image code stream at T+1 time.

It is to be noted that the panoramic image data, the head position information and the head rotation information may not be acquired in real time, but the head position information and the head rotation information may be added to the existing panoramic video as needed.

In an example, in the existing panoramic video, according to user preferences or preset conventions (such as director's cut), multiple sets of movement parameter combinations are generated for panoramic image data at the same time, and each set of movement parameter combinations may include at least one of head position information or head rotation information. For example, two sets of movement parameter combinations are set at time T, in which the head position information in a first set is A1 and the head position information in a second set is A2; A1 and A2 are written into an image code stream at time T. At time T+1, there are two sets of movement parameter combinations, in which the head position information in a first set is B1 and the head position information in a second set is B2; B1 and B2 are written into an image code stream at time T+1, or difference information (B1-A1) between B1 and A1 and difference information (B2-A2) between B2 and A2 may be written into the image code stream at time T+1, or the head position information and the difference information may be written into the image code stream at time T+1 in different combinations. If the head rotation information is not changed from time T to time T+1, that is, A1 = B1 or A2 = B2, B1 or (B1-A1) and B2 or (B2-A2) may not be written into the image code stream at time T+1, or identification information is written into the image code stream at T+1 time.

Similarly, different sets of movement parameter combinations may be represented in the form of a combination of head position information and rotation information, and the above is described by using an example in which the first set of movement parameter combinations includes head position information. In a case where the movement parameter combinations include rotation information, those skilled in the art may refer to the above examples to determine a specific manner of writing the rotation information into the code stream.

It is to be noted that the above head position information may be replaced with at least one of: body movement information, viewpoint movement information or body movement information.

In an example implementation, the present application further provides a code stream processing method. FIG. 2 is a flowchart of another code stream processing method according to the present application. The method may be applied to the case of determining the part of the video picture (that is, target image data) in the code stream to be presented to the user based on the code stream. The method may be performed by a code stream processing device provided by the present application, and the code stream processing device may be implemented by software and/or hardware and integrated on a second terminal. For the content that is not described in detail in this embodiment, reference may be made to the above embodiments, which will not be repeated herein.

As shown in FIG. 2, the code stream processing method provided by the present application includes S210, S220, and S230.

In S210, a code stream is received.

The code stream may be a code stream generated by the first terminal.

In S220, movement information is extracted from the code stream.

After a code stream is received, movement information may be extracted from the code stream. The movement information may be placed in different positions of the code stream, such as an SEI, a VUI, an MPD, and so on.

In S230, in a case where the movement information is extracted, panoramic image data is processed according to the extracted movement information to obtain target image data.

In a case where the movement information is extracted, panoramic image data corresponding to the extracted movement information is processed according to the extracted movement information to determine target image data of the panoramic image data.

The means of processing includes, but is not limited to, intercepting part data from the panoramic image data according to the movement information to generate target image data. The target image data may be directly displayed to the user, or may be stored in the second terminal, or may be encoded to generate a new code stream.

In the code stream processing method provided by the present application, a code stream is received, movement information is extracted from the code stream, and in a case where the movement information is extracted, panoramic image data is processed according to the extracted movement information to obtain target image data. Therefore, the issue that it is difficult to determine which part of the video picture in the immersive video to be presented to the user when the immersive video is transmitted to users for viewing is solved, and when the user views the code stream, target image data to be presented to the user can be automatically determined through the movement information in the code stream, that is, which part of the video picture in the code stream is to be presented to the user can be automatically determined.

On the basis of the above embodiments, variant embodiments of the above embodiment are further proposed, and it is to be noted that for the brevity of description, only differences from the above embodiments will be described in the variant embodiments.

In an embodiment, that movement information is extracted from the code stream includes that: the movement information is extracted from at least one of the following of the code stream: supplemental enhancement information, video usability information or a system level media attribute description unit.

In an embodiment, that panoramic image data is processed according to the extracted movement information to obtain target image data includes that: intercepting is performed on the panoramic image data according to the movement information to obtain the target image data.

In an embodiment, the movement information includes at least one of: head movement information, body movement information or viewpoint movement information.

In an embodiment, the head movement information includes one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

In an embodiment, the body movement information includes one of: body absolute position information, body relative position information, body absolute rotation information, body relative rotation information, a combination of body absolute position information and body absolute rotation information, a combination of body absolute position information and body relative rotation information, a combination of body relative position information and body relative rotation information or a combination of body relative position information and body absolute rotation information.

In an embodiment, the viewpoint movement information includes one of: viewpoint absolute position information, viewpoint relative position information, viewpoint absolute rotation information, viewpoint relative rotation information, a combination of viewpoint absolute position information and viewpoint absolute rotation information, a combination of viewpoint absolute position information and viewpoint relative rotation information, a combination of viewpoint relative position information and viewpoint relative rotation information or a combination of viewpoint relative position information and viewpoint absolute rotation information.

In an embodiment, the movement information includes at least one set of movement parameter combinations, and each set of movement parameter combinations includes at least one of: head movement information, body movement information or viewpoint movement information.

In an embodiment, that panoramic image data is processed according to the extracted movement information to obtain target image data includes that: in a case where the extracted movement information is identification information for indicating that the movement information is the same as movement information at a previous time, the panoramic image data is processed according to the movement information at the previous time to obtain the target image data.

In a case where the extracted movement information is the identification information, it can be considered that the current movement information is the same as the movement information at the previous time, and the panoramic image data may be directly processed according to the movement information at the previous time to obtain the target image data. The specific content of the identification information is not limited, as long as the identification information can indicate that the current movement information is the same as the movement information at the previous time.

In an embodiment, the method further includes that: in a case where no movement information is extracted, the panoramic image data is processed according to the movement information at the previous time to obtain the target image data. In a case where no movement information is extracted, it can be considered that the current movement information is the same as the movement information at the previous time, and the panoramic image data may be directly processed according to the movement information at the previous time to obtain the target image data.

In an embodiment, that panoramic image data is processed according to the extracted movement information to obtain target image data includes that: in a case where the movement information includes at least two sets of movement parameter combinations and a selection instruction is detected, a movement parameter group corresponding to the selection instruction is determined, and the panoramic image data is processed according to a movement parameter combination corresponding to the movement parameter group to obtain the target image data; and in a case where the movement information includes at least two sets of movement parameter combinations and no selection instruction is detected, a movement parameter group at the previous time is used as a movement parameter group at the current time, and the panoramic image data is processed according to a movement parameter combination corresponding to the movement parameter group at the current time to obtain the target image data.

In a case where the movement information includes at least two sets of movement parameter combinations, different movement parameter combinations may correspond to different target image data. The user may select movement parameter groups to obtain different target image data. For example, the movement parameter group of each set of movement parameter combinations may be displayed on the second terminal for the user to select. The movement parameter group may be used for distinguishing each set of movement parameter combinations. The method for naming the movement parameter group is not limited, as long as the movement parameter group can distinguish the target image data corresponding to different sets of movement parameter combinations. For example, in the event scenario, the movement parameter groups may be named after Athlete A and Athlete B.

The selection instruction may be understood as an instruction for selecting the movement parameter group. After the selection instruction is detected, the movement parameter group corresponding to the selection instruction is determined, and different selection instructions may correspond to different movement parameter groups. After the movement parameter group is determined, the panoramic image data is processed according to the movement parameter combination corresponding to the movement parameter group, that is, the movement parameter combination corresponding to the movement parameter group is selected from the movement information to process the panoramic image data.

In a case where no selection instruction is detected, it can be considered that the user has not changed the movement parameter combinations at present, and the panoramic image data may be processed according to the movement parameter combination corresponding to the movement parameter group at the previous time.

In an embodiment, the target image data is encoded, and at least one of the following operations is performed on the encoded target image data: storing or transmitting.

After the target image data is obtained, the target image may be encoded to form a new code stream.

In an embodiment, the method further includes that: the target image data is displayed.

The embodiments of the present application will be described through examples below, in which a code stream is acquired, movement information is extracted from the code stream, corresponding panoramic image data is processed according to the movement information to obtain target image data, and the target image data is displayed or encoded to generate a new code stream that is transmitted or stored.

In order to further describe the technical schemes provided by the embodiments, the technical schemes of the embodiments of the present application will be described below through specific application examples. The following description of the various methods described above is specific examples of the corresponding methods. When multiple methods are used, the examples of the following methods may be simply combined and concatenated to obtain the corresponding examples.

Example 1: A code stream at time T is acquired, the head position that is at point A is extracted from the code stream, part of image data in panoramic image data, that is, target image data, is acquired according to the position information of point A, and the part of image data is displayed on a display device. A code stream at time T+1 is acquired, the head position that is at point B is extracted from the code stream, part of image data in the panoramic image data is acquired according to the position information of point B, and the part of image data is displayed on the display device.

If the head movement information acquired at time T+1 is position increment information (B-A) of point B relative to point A, new position information B is calculated, and then part of image data in the panoramic image data is acquired according to the position information of point B, and the part of image data is displayed on the display device.

If the head movement information acquired at time T+1 indicates that the position is not changed, part of image data in the panoramic image data is acquired according to the position of point A at time T, and the part of image data is displayed on the display device.

Example 2: A code stream at time T is acquired, the head rotation angle α is extracted from the code stream, part of image data in panoramic image data is acquired according to α, and the part of image data is displayed on a display device. A code stream at time T+1 is acquired, the head rotation angle β is extracted from the code stream, part of image data in the panoramic image data is acquired according to β, and the part of image data is displayed on the display device.

If the difference information (β-α) relative to the head rotation angle α is acquired at time T+1, a new head rotation angle β is calculated, and then part of image data in the panoramic image data is acquired according to β, and the part of image data is displayed on the display device.

If the head movement information acquired at time T+1 indicates that the position is not changed, part of image data in the panoramic image data is acquired according to the rotation angle α at time T, and the part of image data is displayed on the display device. If no head position information is acquired or the head movement information is identification information, it can be indicated that the head movement information is not changed.

Example 3: A code stream at time T is acquired, the head position that is at point A and the head rotation angle α are extracted from the code stream, part of image data in panoramic image data is acquired according to the position of point A and the head rotation angle α, and the part of image data is displayed on the display device.

A code stream at time T+1 is acquired, the head position that is at point B and the head rotation angle β are extracted from the code stream, part of image data in the panoramic image data is acquired according to the position of point B and the head rotation angle β, and the part of image data is displayed on the display device.

If the head movement information acquired at time T+1 is position increment information (B-A) of point B relative to point A and the difference information (β-α) relative to the rotation angle α is acquired, new position information B and a new head rotation angle β are calculated, and then part of image data in the panoramic image data is acquired according to the position information of point B and the head rotation angle β, and the part of image data is displayed on the display device.

If the head movement information acquired at time T+1 indicates that the position is not changed, part of image data in the panoramic image data is acquired according to the position of point A and the rotation angle α at time T, and the part of image data is displayed on the display device.

Example 4: A code stream at time T is acquired, multiple sets of head movement information are extracted from the code stream, one of the multiple sets of head movement information, for example, a first set of head movement information, is selected, part of image data in panoramic image data is acquired according to the first set of head movement information, and the part of image data is displayed on a display device.

A code stream at time T+1 is acquired, multiple sets of head movement information are extracted from the code stream, a first set of head movement information is selected according to the movement information group selected at time T, part of image data in the panoramic image data is directly acquired according to the movement information if the movement information is an absolute value, and an image is displayed on the display device.

If the movement information is a relative value, new absolute movement information is calculated, and then part of image data in the panoramic image data is acquired according to the new absolute movement information; or no new absolute movement information is calculated, and part of image data in the panoramic image is directly acquired according to the position at time T, such as the movement information at time T and the head movement increment information, that is, the relative movement information at time T+1 (such as head relative position information); finally, the part of image data is displayed on the display device.

Similarly, different sets of head movement information may be represented in a combination of position information and rotation information. For example, the different sets of head movement information include at least one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

Similarly, the head position information in Examples 1 to 4 may be replaced with at least one of: body movement information; viewpoint movement information; head movement information and viewpoint movement information; head movement information and body movement information; or head movement information, viewpoint movement information and body movement information.

It is to be noted that in the code stream processing method, the video code stream belongs to the stereo video, and when the method is applied to the stereo video, the movement information may be used in both the left field of view and the right field of view. The movement information may generate a code stream only with the left field of view, or may generate a coed stream only with the right field of view, or may generate a code stream with both the left field of view and right field of view.

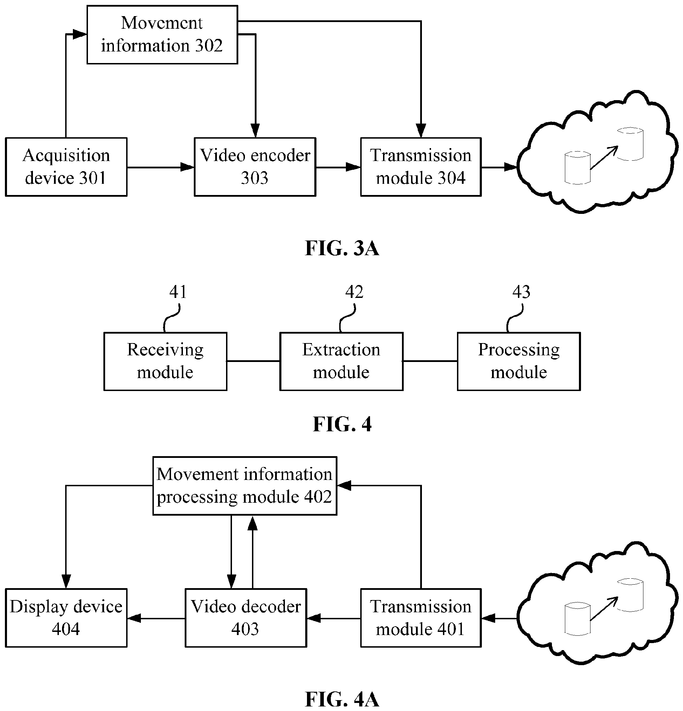

The present application provides a code stream processing device. FIG. 3 is a structural schematic diagram of a code stream processing device according to the present application, and the code stream processing device may be integrated on a first terminal. As shown in FIG. 3, the device includes: an acquisition module 31, which is configured to acquire panoramic image data and acquire movement information, and a generation module 32, which is configured to generate a code stream according to the panoramic image data and the movement information.

In the process of acquiring the movement information, the acquisition module 31 may first acquire movement parameters. The movement parameters include a head movement parameter, a body movement parameter, and a viewpoint movement parameter. After the movement parameters are acquired, with reference to the above tables, corresponding auxiliary data may be added, such as movement information identifiers, to obtain the movement information.

The movement information may be used by a video encoder or directly used by a transmission module.

The code stream processing device provided by the embodiment will be described through examples below. FIG. 3A is a structural schematic diagram of another code stream processing device according to the present application. As shown in FIG. 3A, the device includes: an acquisition device 301, which is configured to acquire spherical panoramic video image data (that is, panoramic image data) and movement data; a movement module 302, which is configured to generate movement information based on the movement data, where the movement information may be used by a video encoder or a transmission module; a video encoder 303, which is configured to encode the video image data, and encode the movement information into a corresponding position in the code stream or encode the movement information into the encoded video code stream; and a transmission module 304, which is configured to perform network transport layer encoding on video encode data or media data, where video image data containing the movement information may be encoded or video data and the movement information may be encoded separately.

The acquisition device 301, the movement information module 302, the video encoder 303, and the transmission module 304 described above may be implemented through the use of dedicated hardware as well as hardware capable of executing the processing in association with appropriate software. Such hardware or dedicated hardware may include an application-specific integrated circuit (ASIC), various other circuits, various processors and the like. The functions, when implemented by a processor, may be provided by a single dedicated processor, by a single shared processor, or by multiple individual processors (some of which may be shared). In addition, the processor should not be construed to refer exclusively to hardware capable of executing software, and may implicitly include, but is not limited to, digital signal processor (DSP) hardware and a read-only memory (ROM), a random-access memory (RAM) and a non-volatile storage device for storing software.

The device in the embodiment may be a device in the video application, such as a mobile phone, a computer, a server, a set-top box, a portable mobile terminal, a digital video camera, a television broadcasting system device, and the like.

The code stream processing device provided by the embodiment is used for implementing the code stream processing method of the embodiment shown in FIG. 1. The implementation principles and technical effects of the code stream processing device by the embodiment are similar to those of the code stream processing method of the embodiment shown in FIG. 1, which will not be repeated herein.

In an embodiment, the movement information and the panoramic image data are acquired synchronously or the movement information is preset.

In an embodiment, the movement information includes at least one of: head movement information, body movement information or viewpoint movement information.

In an embodiment, the head movement information includes one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

In an embodiment, the body movement information includes one of: body absolute position information, body relative position information, body absolute rotation information, body relative rotation information, a combination of body absolute position information and body absolute rotation information, a combination of body absolute position information and body relative rotation information, a combination of body relative position information and body relative rotation information or a combination of body relative position information and body absolute information.

In an embodiment, the viewpoint movement information includes one of: viewpoint absolute position information, viewpoint relative position information, viewpoint absolute rotation information, viewpoint relative rotation information, a combination of viewpoint absolute position information and viewpoint absolute rotation information, a combination of viewpoint absolute position information and viewpoint relative rotation information, a combination of viewpoint relative position information and viewpoint relative rotation information or a combination of viewpoint relative position information and viewpoint absolute rotation information.

In an embodiment, the movement information includes at least one set of movement parameter combinations, and each set of movement parameter combinations is configured with a corresponding movement parameter group and includes at least one of: head movement information, body movement information or viewpoint movement information.

In an embodiment, the generation module 32 is configured to, in a case where the movement information is the same as movement information at a previous time, generate the code stream according to the panoramic image data; or in a case where the movement information is the same as movement information at a previous time, use identification information for indicating that the movement information is the same as the movement information at the previous time as new movement information, and generate the code stream according to the panoramic image data and the new movement information.

In an embodiment, the generation module 32 is configured to write the movement information into a code stream generated from the panoramic image data.

In an embodiment, the generation module 32 is configured to write the movement information into at least one of the following of the code stream generated from the panoramic image data: supplemental enhancement information, video usability information or a system layer media attribute description unit.

In an embodiment, the device further includes at least one of a storage module or a sending module. The storage module is configured to store the code stream. The sending module is configured to send the code stream.

The present application further provides a code stream processing device. FIG. 4 is a structural schematic diagram of another code stream processing device according to the present application, and the code stream processing device may be integrated on a second terminal. As shown in FIG. 4, the device includes: a receiving module 41, which is configured to receive a code stream; an extraction module 42, which is configured to extract movement information from the code stream; and a processing module 43, which is configured to, in a case where the movement information is extracted, process panoramic image data according to the extracted movement information to obtain target image data.

The code stream processing device provided by the embodiment will be described through examples below. FIG. 4A is a structural schematic diagram of another code stream processing device according to the present application. The device may include: a transmission module 401, which is configured to decode network transport layer data including video encode data or media data, where only movement information is extracted or video image data including movement information is extracted; a movement information processing module 402, which is configured to parse the movement information; a video decoder 403, which is configured to decode the video image data or extract the movement information from a video code stream for use by a movement information processing module; and a display device 404, which is configured to display a panoramic video image or select part of the image to display according to the movement information.

The transmission module 401, the area adjacent information processing module 402, the video decoder 403, and the display device 404 described above may be implemented through the use of dedicated hardware as well as hardware capable of executing the processing in association with appropriate software. Such hardware or dedicated hardware may include an application-specific integrated circuit (ASIC), various other circuits, various processors and the like. The functions, when implemented by a processor, may be provided by a single dedicated processor, by a single shared processor, or by multiple individual processors (some of which may be shared). In addition, the processor should not be construed to refer exclusively to hardware capable of executing software, and may implicitly include, but is not limited to, digital signal processor (DSP) hardware and a read-only memory (ROM), a random-access memory (RAM) and a non-volatile storage device for storing software.

The device in the embodiment may be a device in the video application, such as a mobile phone, a computer, a server, a set-top box, a portable mobile terminal, a digital video camera, a television broadcasting system device, and the like.

The code stream processing device provided by the embodiment is used for implementing the code stream processing method of the embodiment shown in FIG. 2. The implementation principles and technical effects of the code stream processing device by the embodiment are similar to those of the code stream processing method of the embodiment shown in FIG. 2, which will not be repeated herein.

In an embodiment, the extraction module 42 is configured to extract the movement information from at least one of the following of the code stream: supplemental enhancement information, video usability information or a system level media attribute description unit.

In an embodiment, the processing module 43 is configured to perform intercepting on the panoramic image data according to the movement information to obtain the target image data.

In an embodiment, the movement information includes at least one of: head movement information, body movement information or viewpoint movement information.

In an embodiment, the head movement information includes one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

In an embodiment, the body movement information includes one of: body absolute position information, body relative position information, body absolute rotation information, body relative rotation information, a combination of body absolute position information and body absolute rotation information, a combination of body absolute position information and body relative rotation information, a combination of body relative position information and body relative rotation information or a combination of body relative position information and body absolute rotation information.

In an embodiment, the viewpoint movement information includes one of: viewpoint absolute position information, viewpoint relative position information, viewpoint absolute rotation information, viewpoint relative rotation information, a combination of viewpoint absolute position information and viewpoint absolute rotation information, a combination of viewpoint absolute position information and viewpoint relative rotation information, a combination of viewpoint relative position information and viewpoint relative rotation information or a combination of viewpoint relative position information and viewpoint absolute rotation information.

In an embodiment, the movement information includes at least one set of movement parameter combinations, and each set of movement parameter combinations includes at least one of: head movement information, body movement information or viewpoint movement information.

In an embodiment, the processing module 43 is configured to, in a case where the extracted movement information is identification information for indicating that the movement information is the same as movement information at a previous time, process the panoramic image data according to the movement information at the previous time to obtain the target image data.

In an embodiment, the processing module 43 is configured to, in a case where no movement information is extracted, process the panoramic image data according to the movement information at the previous time to obtain the target image data.

In an embodiment, the processing module 43 is configured to, in a case where the movement information includes at least two sets of movement parameter combinations and a selection instruction is detected, determine a movement parameter group corresponding to the selection instruction, and process the panoramic image data according to a movement parameter combination corresponding to the movement parameter group to obtain the target image data; and in a case where the movement information includes at least two sets of movement parameter combinations and no selection instruction is detected, use a movement parameter group at the previous time as a movement parameter group at the current time, and process the panoramic image data according to a movement parameter combination corresponding to the movement parameter group at the current time to obtain the target image data.

In an embodiment, the device further includes an encoding module, which is configured to encode the target image data, and perform at least one of the following operations on the encoded target image data: storing or transmitting.

In an embodiment, the device further includes a display module, which is configured to display the target image data.

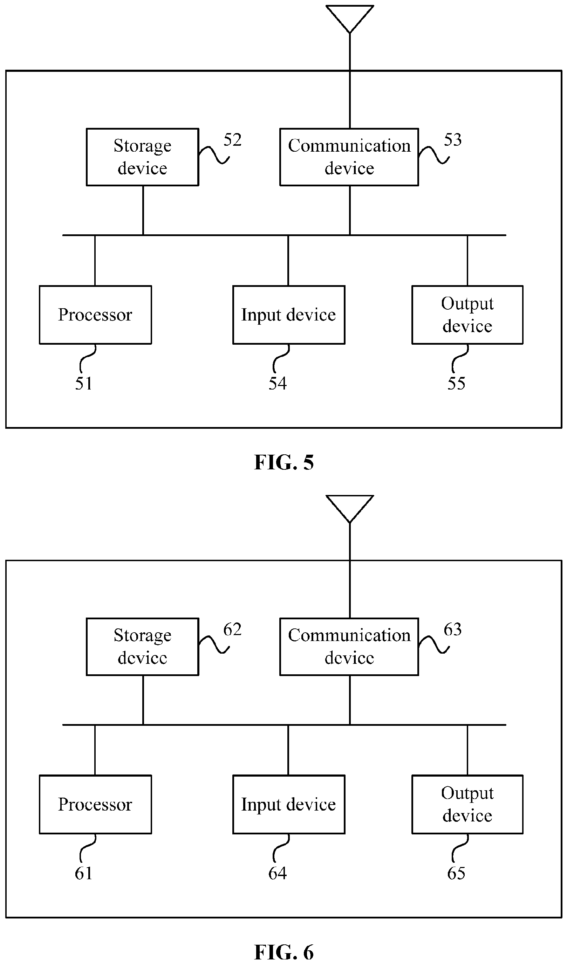

An embodiment of the present application further provides a first terminal. FIG. 5 is a structural schematic diagram of a first terminal according to an embodiment of the present application. As shown in FIG. 5, the first terminal provided by the present application includes one or more processors 51 and a storage device 52. The first terminal may include one or more processors 51, with one processor 51 shown in FIG. 5 as an example. The storage device 52 is configured to store one or more programs, and the one or more programs are executed by the one or more processors 51 to enable the one or more processors 51 to perform the code stream processing method in the embodiments of the present application.

The first terminal further includes a communication device 53, an input device 54, and an output device 55.

The processor 51, the storage device 52, the communication device 53, the input device 54, and the output device 55 in the first terminal may be connected via a bus or in other manners, with connection via a bus as an example in FIG. 5.

The input device 54 may be configured to receive inputted digital or character information and to generate key signal input related to user settings and function control of the first terminal. The input device 54 includes, but is not limited to, a collection device for acquiring panoramic image data and an acquisition device for acquiring movement information. The acquisition device is not limited here, as long as movement information can be acquired, for example, such an acquisition device may be a sensor. The output device 55 may include a display screen and other display devices.

The communication device 53 may include a receiver and a transmitter. The communication device 53 is configured to perform transceiving communication on information according to the control of the processor 51. The information includes, but is not limited to, a code stream, panoramic image data, and movement information.

The storage device 52, as a computer-readable storage medium, may be configured to store software programs and computer-executable programs and modules such as program instructions/modules corresponding to the code stream processing method in the embodiments of the present application (such as the acquisition module 31 and the generation module 32 in the code stream processing device). The storage device 52 may include a program storage region and a data storage region. The program storage region may store an operating system and an application program required by at least one function while the data storage region may store data created depending on the use of the first terminal. Additionally, the storage device 52 may include a high-speed random-access memory, and may further include a non-volatile memory such as at least one disc storage device, a flash memory or other non-volatile solid-state memories. In some examples, the storage device 52 may further include memories located remotely relative to the processor 51, and these remote memories may be connected to the first terminal via a network. The examples of the above-mentioned network include, but are not limited to, the Internet, an intranet, a local area network, a mobile communication network, and a combination thereof.

An embodiment of the present application further provides a second terminal. FIG. 6 is a structural schematic diagram of a second terminal according to an embodiment of the present application. As shown in FIG. 6, the second terminal provided by the present application includes one or more processors 61 and a storage device 62. The second terminal may include one or more processors 61, with one processor 61 shown in FIG. 6 as an example. The storage device 62 is configured to store one or more programs, and the one or more programs are executed by the one or more processors 61 to enable the one or more processors 61 to perform the code stream processing method in the embodiments of the present application.

The second terminal further includes a communication device 63, an input device 64, and an output device 65.

The processor 61, the storage device 62, the communication device 63, the input device 64, and the output device 65 in the second terminal may be connected via a bus or in other manners, with connection via a bus as an example in FIG. 6.

The input device 64 may be configured to receive inputted digital or character information and to generate key signal input related to user settings and function control of the second terminal. The output device 65 may include a display screen and other display devices.

The communication device 63 may include a receiver and a transmitter. The communication device 63 is configured to perform transceiving communication on information according to the control of the processor 61. The information includes, but is not limited to, a code stream, target image data, and encoded target image data.

The storage device 62, as a computer-readable storage medium, may be configured to store software programs and computer-executable programs and modules such as program instructions/modules corresponding to the code stream processing method in the embodiments of the present application (such as the receiving module 41, the extraction module 42 and the processing module 43 in the code stream processing device). The storage device 62 may include a program storage region and a data storage region. The program storage region may store an operating system and an application program required by at least one function while the data storage region may store data created depending on the use of the second terminal. Additionally, the storage device 62 may include a high-speed random-access memory, and may further include a non-volatile memory such as at least one disc storage device, a flash memory or other non-volatile solid-state memories. In some examples, the storage device 62 may further include memories located remotely relative to the processor 61, and these remote memories may be connected to the second terminal via a network. The examples of the above-mentioned network include, but are not limited to, the Internet, an intranet, a local area network, a mobile communication network, and a combination thereof.

An embodiment of the present application further provides a storage medium. The storage medium is configured to store a computer program which, when executed by a processor, performs any of the code stream processing methods in the embodiments of the present application, such as the code stream processing method applied to the first terminal and the code stream processing method applied to the second terminal. The code stream processing method applied to the first terminal includes: acquiring panoramic image data; acquiring movement information; and generating a code stream according to the panoramic image data and the movement information.

The code stream processing method applied to the second terminal includes: receiving a code stream; extracting movement information from the code stream; and in a case where the movement information is extracted, processing panoramic image data according to the extracted movement information to obtain target image data.

The above are only exemplary embodiments of the present application and are not intended to limit the scope of the present application.

It is to be understood by those skilled in the art that the term "terminal" (including the first terminal and the second terminal) covers any suitable type of wireless user devices, for example, mobile phones, portable data processing devices, portable web browsers, head-mounted display devices or vehicle-mounted mobile stations.

In general, various embodiments of the present application may be implemented in hardware or special purpose circuits, software, logic or any combination thereof. For example, the above-mentioned embodiments, in some aspects, may be implemented in hardware while in other aspects, the embodiments may be implemented in firmware or software that may be executed by a controller, a microprocessor, or other computing devices, which is not limited thereto.

The embodiments of the present application may be implemented by computer program instructions executed by a data processor of a mobile device, such as in the processor entity, or by hardware, or by a combination of software and hardware. The computer program instructions may be assembly instructions, instruction set architecture (ISA) instructions, machine instructions, machine-related instructions, microcodes, firmware instructions, status setting data or source or object codes written in any combination of one or more programming languages.

A block diagram of any logic flow in drawings of the present application may represent program steps, or interconnected logic circuits, modules, and functions, or a combination of program steps and logic circuits, modules and functions. The computer programs may be stored in a memory. The memory may be of any type suitable for a local technical environment and may be implemented using any suitable data storage technology, such as, but not limited to, a read-only memory (ROM), a random-access memory (RAM), and an optical memory device and system (digital video disc (DVD) or compact disc (CD)). The computer-readable storage medium may include a non-transitory storage medium. The data processor may be of any type suitable to the local technical environment, and for example, includes, but is not limited to, a general-purpose computer, a special-purpose computer, a microprocessor, a digital signal processing (DSP), an application-specific integrated circuit (ASIC), a field-programmable gate array (FGPA), and a processor based on a multi-core processor architecture.

The exemplary embodiments of the present application have been described in detail through exemplary and non-limiting examples. However, in conjunction with the drawings and claims, various modifications and adjustments to the above-mentioned embodiments will be apparent to those skilled in the art without departing from the scope of the present application. Therefore, the appropriate scope of the present application is defined according to the claims.

## Claims

1. A code stream processing method, comprising:
acquiring panoramic image data;
acquiring movement information; and
generating a code stream according to the panoramic image data and the movement information.

2. The method of claim 1, wherein the movement information and the panoramic image data are acquired synchronously or the movement information is preset.

3. The method of claim 1, wherein the movement information comprises at least one of: head movement information, body movement information or viewpoint movement information.

4. The method of claim 3, wherein the head movement information comprises one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

5. The method of claim 3, wherein the body movement information comprises one of: body absolute position information, body relative position information, body absolute rotation information, body relative rotation information, a combination of body absolute position information and body absolute rotation information, a combination of body absolute position information and body relative rotation information, a combination of body relative position information and body relative rotation information or a combination of body relative position information and body absolute information.

6. The method of claim 3, wherein the viewpoint movement information comprises one of: viewpoint absolute position information, viewpoint relative position information, viewpoint absolute rotation information, viewpoint relative rotation information, a combination of viewpoint absolute position information and viewpoint absolute rotation information, a combination of viewpoint absolute position information and viewpoint relative rotation information, a combination of viewpoint relative position information and viewpoint relative rotation information or a combination of viewpoint relative position information and viewpoint absolute rotation information.

7. The method of claim 1, wherein the movement information comprises at least one set of movement parameter combinations, and each set of the at least one set of movement parameter combinations is configured with a corresponding movement parameter group and comprises at least one of: head movement information, body movement information or viewpoint movement information.

8. The method of claim 1, wherein generating the code stream according to the panoramic image data and the movement information comprises at least one of the following:
in a case where the movement information is the same as movement information at a previous time, generating the code stream according to the panoramic image data; or
in a case where the movement information is the same as movement information at a previous time, using identification information for indicating that the movement information is the same as the movement information at the previous time as new movement information, and generating the code stream according to the panoramic image data and the new movement information.

9. The method of claim 1, wherein generating the code stream according to the panoramic image data and the movement information comprises:
writing the movement information into a code stream generated from the panoramic image data.

10. The method of claim 9, wherein writing the movement information into the code stream generated from the panoramic image data comprises:
writing the movement information into at least one of the following of the code stream generated from the panoramic image data: supplemental enhancement information, video usability information or a system level media attribute description unit.

11. The method of claim 1, further comprising:
storing or sending the code stream.

12. A code stream processing method, comprising:
receiving a code stream;
extracting movement information from the code stream; and
in a case where the movement information is extracted, processing panoramic image data according to the extracted movement information to obtain target image data.

13. The method of claim 12, wherein extracting the movement information from the code stream comprises:
extracting the movement information from at least one of the following of the code stream: supplemental enhancement information, video usability information or a system level media attribute description unit.

14. The method of claim 12, wherein processing the panoramic image data according to the extracted movement information to obtain the target image data comprises:
intercepting part data from the panoramic image data according to the movement information to obtain the target image data.

15. The method of claim 12, wherein the movement information comprises at least one of: head movement information, body movement information or viewpoint movement information.

16. The method of claim 15, wherein the head movement information comprises one of: head absolute position information, head relative position information, head absolute rotation information, head relative rotation information, a combination of head absolute position information and head absolute rotation information, a combination of head absolute position information and head relative rotation information, a combination of head relative position information and head relative rotation information or a combination of head relative position information and head absolute rotation information.

17. The method of claim 15, wherein the body movement information comprises one of: body absolute position information, body relative position information, body absolute rotation information, body relative rotation information, a combination of body absolute position information and body absolute rotation information, a combination of body absolute position information and body relative rotation information, a combination of body relative position information and body relative rotation information or a combination of body relative position information and body absolute rotation information.

18. The method of claim 15, wherein the viewpoint movement information comprises one of:
viewpoint absolute position information, viewpoint relative position information, viewpoint absolute rotation information, viewpoint relative rotation information, a combination of viewpoint absolute position information and viewpoint absolute rotation information, a combination of viewpoint absolute position information and viewpoint relative rotation information, a combination of viewpoint relative position information and viewpoint relative rotation information or a combination of viewpoint relative position information and viewpoint absolute rotation information.

19. The method of claim 12, wherein the movement information comprises at least one set of movement parameter combinations, and each set of the at least one set of movement parameter combinations comprises at least one of: head movement information, body movement information or viewpoint movement information.

20. The method of claim 12, wherein processing the panoramic image data according to the extracted movement information to obtain the target image data comprises:
in a case where the extracted movement information is identification information for indicating that the movement information is the same as movement information at a previous time, processing the panoramic image data according to the movement information at the previous time to obtain the target image data.

21. The method of claim 12, further comprising:
in a case where no movement information is extracted, processing the panoramic image data according to movement information at a previous time to obtain the target image data.

22. The method of claim 12, wherein the movement information comprises at least two sets of movement parameter combinations, and each set of the at least two sets of movement parameter combinations is configured with a corresponding movement parameter group; and
wherein processing the panoramic image data according to the extracted movement information to obtain the target image data comprises:
in a case where a selection instruction is detected, determining a movement parameter group corresponding to the selection instruction, and processing the panoramic image data according to a movement parameter combination corresponding to the movement parameter group to obtain the target image data; and
in a case where no selection instruction is detected, using a movement parameter group at a previous time as a movement parameter group at a current time, and processing the panoramic image data according to a movement parameter combination corresponding to the movement parameter group at the current time to obtain the target image data.

23. The method of claim 12, further comprising:
encoding the target image data; and
performing at least one of the following operations on the encoded target image data: storing or transmitting.

24. The method of claim 12, further comprising:
displaying the target image data.

25. A code stream processing device, comprising:
an acquisition module, which is configured to acquire panoramic image data and acquire movement information; and
a generation module, which is configured to generate a code stream according to the panoramic image data and the movement information.

26. A code stream processing device, comprising:
a receiving module, which is configured to receive a code stream;
an extraction module, which is configured to extract movement information from the code stream; and
a processing module, which is configured to, in a case where the movement information is extracted, process panoramic image data according to the extracted movement information to obtain target image data.

27. A first terminal, comprising:
at least one processor; and
a storage device, which is configured to store at least one program;
wherein the at least one program, when executed by the at least one processor, enables the at least one processor to perform the code stream processing method of any one of claims 1 to 11.

28. A second terminal, comprising:
at least one processor; and
a storage device, which is configured to store at least one program;
wherein the at least one program, when executed by the at least one processor, enables the at least one processor to perform the code stream processing method of any one of claims 12 to 24.

29. A storage medium for storing a computer program which, when executed by a processor, performs the code stream processing method of any one of claims 1 to 24.
